(19) Europäisches Patentamt / European Patent Office / Office européen des brevets

(11) **EP 3 239 214 A1**

(12) **EUROPEAN PATENT APPLICATION**
published in accordance with Art. 153(4) EPC

(43) Date of publication:
01.11.2017 Bulletin 2017/44

(51) Int Cl.:
*C08J 3/14* (2006.01)  *C08K 3/04* (2006.01)
*C08L 77/00* (2006.01)

(21) Application number: 15872709.9

(22) Date of filing: 09.12.2015

(86) International application number:
**PCT/JP2015/084467**

(87) International publication number:
**WO 2016/104140 (30.06.2016 Gazette 2016/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 24.12.2014 JP 2014259698

(71) Applicant: Toray Industries, Inc.
Tokyo 103-8666 (JP)

(72) Inventors:
• **OTSUBO, Takahiko**
Nagoya-shi
Aichi 455-8502 (JP)
• **MIYAMA, Hisashi**
Tokyo 103-8666 (JP)
• **TAKEZAKI, Hiroshi**
Nagoya-shi
Aichi 455-8502 (JP)

(74) Representative: **Webster, Jeremy Mark et al**
**Mewburn Ellis LLP**
**City Tower**
**40 Basinghall Street**
**London EC2V 5DE (GB)**

(54) **POLYAMIDE MICROPARTICLES**

(57) Carbon-black-encapsulated polyamide microparticles obtained by bringing a poor solvent of polyamide into contact with an emulsion to cause carbon-black-encapsulated polyamide to be precipitated, the emulsion being formed in a system that has separated into two solution phases when carbon black is mixed with a polymer solution prepared by dissolving a polyamide, a polymer (B) different from the polyamide, and an organic solvent (C), the polymer (B) being the main component in one of the phases, and, in the other of the phases, the polyamide being the main component and the carbon black being selectively distributed; wherein it is possible to obtain black polyamide microparticles having a number-average particle size of 1-200 $\mu$m and a temperature difference between the melting temperature and the cooling crystallization temperature of 25 °C or more, the microparticles being suitable for use in powder bed fusion additive manufacturing.

**Description**

Technical Field of the Invention

The present invention relates to black-colored polyamide microparticles and a method for producing the same. More specifically, the present invention relates to microparticles comprising a carbon-black-encapsulated polyamide resin and a method for producing the same.

Background Art of the Invention

Polymer microparticles are used for molding and processing of various kinds of polymers, and for example, coating by coating-film forming of a dispersion of polymer microparticles, and a processing into a film, a sheet, or the like, are exemplified. In addition, known is a method in which polymer microparticles are arranged or a powder layer is formed, and then thermal energy is applied thereto to fuse the polymer microparticles to each other to model the polymer into a desired form.

Further, a powder bed fusion additive manufacturing is a method for irradiating a laser to a powder layer of polymer microparticles, selectively melting a part of the laser irradiated layer to fuse/sinter the particles to each other, and thereafter, cooling the fused portion to obtain a formed body.

The polymer microparticles for this powder bed fusion additive manufacturing form a powder layer having a uniform thickness while laminating powder by a machine in the process. From this, it is required for the polymer microparticles of this application to have a particle size distribution as narrow as possible and a good flowability.

Further, as one of the characteristics required for the polymer microparticles of the powder bed fusion additive manufacturing, a temperature difference $\Delta T$ ($\Delta T = Tm-Tc$) between the melting temperature Tm of the polymer microparticles and the cooling crystallization temperature Tc of the polymer microparticles is exemplified. The larger the temperature difference $\Delta T$ between the melting temperature Tm of the polymer microparticles and the cooling crystallization temperature Tc of the polymer microparticles, the more preferred they are as the powder material of the powder bed fusion additive manufacturing, and in case where the temperature difference $\Delta T$ is large, the volumetric shrinkage occurring when the laser irradiated portion is cooled and solidified is reduced, and the dimensional stability of the formed body is increased (for example, Patent document 1). The value of the temperature difference $\Delta T$ between the melting temperature Tm and the cooling crystallization temperature Tc is generally known also as an index for estimating the formability of the resin (for example, Patent document 2 and Patent document 3).

Further, recyclability of polymer microparticles is also one of the required characteristics. In the powder bed fusion additive manufacturing, because the powder material non-irradiated with the laser is recovered after the manufacturing and recycled to the next manufacturing process again, the recyclability of polymer microparticles is economically important.

As the polymer microparticles used in the powder bed fusion additive manufacturing, there are generally resin powders of polyamide 12 or polyamide 11. By adding additives to these polyamide-based resin powders, it has been studied to improve the function of the formed body formed with the polyamide resin powder and to impart new functions.

For example, in Patent documents 4 and 5, a spherical filler made of a spherical carbon is mixed to the powder of polyamide 11 or polyamide 12 to reduce heat shrinkage of the formed body and increase the strength of the formed body.

Various technologies for coloring a polyamide resin powder with a coloring agent are also known, not limited to the application to powder bed fusion additive manufacturing. For example, as described in Patent document 6, there is a method for kneading a polyamide resin and a coloring agent such as carbon black to prepare a master batch, and pulverizing it into a colored powder. Further, as described in

Patent document 7, there is a method for mechanochemically treating carbon black on the surfaces of polyamide particles to obtain particles having carbon black adhered to the surfaces of the resin particles. By using these colored particles as a material, a colored formed body can be manufactured.

Prior art documents

Patent documents

Patent document 1: JP-A-HEI 11-216779
Patent document 2: WO 2011/136263
Patent document 3: JP-A-2010-70638
Patent document 4: JP-A-2009-13395

Patent document 5: JP-A-2014-188871
Patent document 6: JP-A-2008-285649
Patent document 7: JP-A-2010-235831

## Summary of the Invention

### Problems to be solved by the Invention

However, according to the investigation by the inventors of the present invention, since any of the polyamide powder described in Patent documents 4 and 5 is a powder mixture dry blended with resin powder and spherical carbon filler, it is inevitable that the particles are separated at the time of recycling by the difference in specific gravity between the resin powder and the additive, and because such a powder cannot be reused for the next manufacturing, it is not practical to use it in the powder bed fusion additive manufacturing. Further, because the spherical carbon filler used as the additive is a special substance, it is desired to replace it with a general-purpose product.

The colored polyamide powder obtained by pulverizing the master batch prepared by the method described in Patent document 6 has low possibility of separation of the resin and carbon black at the time of recycling because the resin and carbon black are kneaded. However, when the resin and carbon black are kneaded, the carbon black acts as a nucleating agent in the composition, the cooling crystallization temperature Tc of the obtained resin powder is elevated, and the temperature difference $\Delta T$ between the melting temperature Tm and the cooling crystallization temperature Tc becomes small, and such a condition is not preferred. Further, according to the study of the inventors of the present invention, because the polyamide is high in elastic modulus, in a known pulverization method, it is practically impossible to pulverize the polyamide composition to a size of a suitable particle diameter for use in the powder bed fusion additive manufacturing.

In the composite polyamide powder obtained by the mechanochemical method described in Patent document 7, because polyamide particles and carbon black are not adhered to each other via chemical bond, it is difficult to prevent desorption and separation of carbon black at the time of recycling.

Accordingly, an object of the present invention is to provide black polyamide microparticles applicable to a powder bed fusion additive manufacturing at a practically usable level.

### Means for solving the Problems

To achieve the above-described object, as a result of earnest investigation by the inventors of the present invention, the following invention has been reached. Namely, the present invention is as follows.

[1] Polyamide microparticles encapsulated with carbon black, having a number-average particle size Dn of 1-200 $\mu$m and a temperature difference $\Delta T$ ($\Delta T$=Tm-Tc) between a melting temperature Tm and a cooling crystallization temperature Tc of 25 °C or more.

[2] The polyamide microparticles according to [1], wherein the polyamide of the polyamide microparticles is polyamide 11 or polyamide 12.

[3] The polyamide microparticles according to [1] or [2], wherein a particle size distribution index PDI is 1 to 3.

[4] The polyamide microparticles according to any one of [1] to [3], wherein a sphericity is 80 or more.

[5] The polyamide microparticles according to any one of [1] to [4], wherein a content of the carbon black is from more than 0 to 5% by mass.

[6] A dispersion containing the polyamide microparticles according to any one of [1] to [5].

[7] A resin composition comprising the polyamide microparticles according to any one of [1] to [5].

[8] A method for producing polyamide microparticles wherein, in a system that is separated into two phases of a solution phase, in which a polyamide is a main component and carbon black is selectively distributed, and a solution phase, in which a polymer (B) different from the polyamide is a main component, when the carbon black is mixed with a polymer solution prepared by dissolving the polyamide, the polymer (B) and an organic solvent (C), after an emulsion is formed, by bringing a poor solvent of the polyamide into contact with the emulsion, polyamide encapsulated with the carbon black is precipitated.

[9] The method for producing polyamide microparticles according to [8], wherein the polyamide is polyamide 11 or polyamide 12.

[10] The method for producing polyamide microparticles according to [8] or [9], wherein an amount of dibutyl phthalate absorption of the carbon black is 200 ml/100 g or less.

[11] The method for producing polyamide microparticles according to any one of [8] to [10], wherein a temperature difference $\Delta T$ ($\Delta T$=Tm-Tc) between a melting temperature Tm and a cooling crystallization temperature Tc of obtained polyamide microparticles is 25°C or more.

Effect according to the Invention

According to the present invention, it is possible to obtain black polyamide microparticles applicable to a powder bed fusion additive manufacturing at a practically usable level, which have been difficult to obtain in the conventional technologies.

Since the black polyamide microparticles of the present invention are encapsulated with carbon black and the temperature difference ∆T between the melting temperature Tm of the polymer microparticles and the cooling crystallization temperature Tc of the polymer microparticles is 25°C or more, they exhibit an excellent formability, and is suitable for obtaining a black formed body by a powder bed fusion additive manufacturing.

Further, since the black polyamide microparticles of the present invention are polyamide microparticles in which carbon black is encapsulated in polyamide forming the microparticles and are not powders in which carbon black and polyamide microparticles are mixed by dry blending or the like, the microparticles are excellent in recyclability at the time of recovery/recycling after being used for modeling by a powder bed fusion additive manufacturing, and economically superior.

Furthermore, since the black polyamide microparticles of the present invention have a suitable particle size for use in a powder bed fusion additive manufacturing, and in a preferred embodiment, the particle size distribution index PDI is small and the sphericity is high, they are suitable for powder bed fusion additive manufacturing also from the point of being excellent in powder flowability. By utilizing the excellent formability and recyclability as described above, they can be served to modeling by the powder bed fusion additive manufacturing.

Embodiments for carrying out the Invention

Hereinafter, the present invention will be explained in detail together with embodiments.

The polyamide microparticles encapsulated with carbon black according to the present invention mean polyamide microparticles made from a polyamide resin in which carbon black is encapsulated, and are black polyamide microparticles characterized by being colored to black by the carbon black.

The polyamide in the present invention is a polymer obtained by polycondensation of a 3-membered ring or more lactam, a polymerizable aminocarboxylic acid, a dibasic acid and a diamine or a salt thereof, or a mixture thereof.

As examples of such polyamides, a crystalline polyamide such as polycaproamide (polyamide 6), polyhexamethylene adipamide (polyamide 66), polypentamethylene adipamide (polyamide 56), polytetramethylene sebacamide (polyamide 410), polypentamethylene sebacamide (polyamide 510), polyhexamethylene sebacamide (polyamide 610), polydecamethylene sebacamide (polyamide 1010), polyundecaamide (polyamide 11), polydodecaamide (polyamide 12), polypentamethylene terephthalamide (polyamide 5T), polyhexamethylene terephthalamide (polyamide 6T), polydecamethylene terephthalamide (polyamide 10T), a copolymer of 4,4'-diaminodicyclohexylmethane and dodeca dioic acid (for example, 'TROGAMID (registered trademark)' CX 7323, supplied by Daicel-Evonik Ltd.) and the like, can be exemplified.

In case where the polyamide microparticles of the present invention are suitably used for modeling by the powder bed fusion additive manufacturing, as employed polyamide, polyamide 11, polyamide 12, polyamide 6, polyamide 66 and polyamide 1010 are preferred, and polyamide 11 or polyamide 12 is particularly preferred.

Since the black polyamide microparticles obtained in the present invention are polymer microparticles in which the temperature difference ∆T (∆T=Tm-Tc) between the melting temperature Tm and the cooling crystallization temperature Tc of the microparticles is 25°C or more, they exhibit a good formability when used for modeling by the powder bed fusion additive manufacturing, and because the formed body obtained is excellent in dimensional stability, a desired formed body can be easily obtained, and in addition, because the man-hours required for trial production of a formed body in the powder bed fusion additive manufacturing can be saved, it is possible to efficiently produce a formed body.

As the powder material of the powder bed fusion additive manufacturing, the temperature difference ∆T between the melting temperature Tm and the cooling crystallization temperature Tc of the black polyamide microparticles is preferably 27 °C or more, more preferably 29 °C or more, further preferably 31 °C or more, and particularly preferably 33 °C or more. Further, the upper limit thereof cannot be determined unequivocally because it varies depending upon the kind of polyamide, but it is about 50 °C.

Further, it is one characteristic of the black polyamide microparticles obtained in the present invention that carbon black is encapsulated in the particles. Since the black polyamide microparticles of the present invention are not powder mixture such as dry blend, the microparticles are not separated into the polyamide microparticles and carbon black when recovered and reused after being used for modeling by the powder bed fusion additive manufacturing, and therefore, they are excellent in recyclability, and economically advantageous.

In the black polyamide microparticles of the present invention, the expression that the carbon black is encapsulated means that there is no sole carbon black separated from the polyamide microparticles, and that all of the carbon black is compounded with the polyamide microparticles. In this connection, although all of the carbon black may be dispersed in the inside of the polyamide microparticles, may be localized in the inside, or may be not only encapsulated but also immobilized on the surfaces of the polyamide microparticles at a state of not being easily separated, it is preferred that carbon black is dispersed inside.

In the black polyamide microparticles of the present invention, by using carbon black having a dibutyl phthalate (hereinafter also abbreviated as DBP) absorption as an index, the temperature difference $\Delta T$ between the Tm and the Tc of the black polyamide microparticles encapsulated with the carbon black can be controlled.

With respect to the carbon black in the present invention, if the DBP absorption is 200 ml/100 g or less, the carbon black becomes difficult to function as a nucleating agent in the polyamide, and an increase in the crystallization rate of the polyamide can be suppressed. Further, when the DBP absorption of carbon black is low, the $\Delta T$ value of the black polyamide microparticles encapsulated with the carbon black tends to increase.

From the viewpoint of controlling the temperature difference $\Delta T$ between Tm and Tc of the polyamide microparticles encapsulated with carbon black at 25°C or more, the carbon black used for producing the black polyamide microparticles of the present invention preferably has a DBP absorption of 200 ml/100 g or less, more preferably 150 ml/100 g or less, further preferably 100 ml/100 g or less, particularly preferably 75 ml/100 g or less, and extremely preferably 50 ml/100 g or less.

Where, the dibutyl phthalate absorption of carbon black means the amount of dibutyl phthalate required to fill the voids in a constant amount of carbon black, and is an index showing the degree of development of the structure of carbon black. The DBP absorption can be determined by the Japanese Industrial Standard (JIS) K 6221: 1982. The dibutyl phthalate absorption of carbon black is a value determined at the state of carbon black before being dispersed in the polyamide microparticles.

As such a carbon black, carbon black powders such as furnace black, acetylene black, thermal black and channel black can be exemplified, and although there is no particular limitation as long as the black polyamide microparticles of the present invention can be obtained, it is preferably furnace black, thermal black or channel black, and more preferably furnace black.

The black polyamide microparticles obtained in the present invention have a number-average particle size Dn of 1-200 $\mu$m. Particularly, in order to be suitably used for modeling by a powder bed fusion additive manufacturing, the lower limit of the number-average particle size Dn is preferably 10 $\mu$m or more, more preferably 20 $\mu$m or more, further preferably 30 $\mu$m or more, and particularly preferably 40 $\mu$m or more. Further, the upper limit of the number-average particle size Dn is preferably 150 $\mu$m or less, more preferably 100 $\mu$m or less, further preferably 75 $\mu$m or less, and particularly preferably 60 $\mu$m or less.

If the number-average particle size Dn is less than the above-described lower limit, it becomes difficult to lay the black polyamide microparticles at a uniform powder layer in the powder bed fusion additive manufacturing, and if it exceeds the upper limit, it becomes difficult to form a formed body having a fine shape or complicated shape, and the texture of the obtained formed body tends to be impaired.

The number-average particle size Dn of the black polyamide microparticles is determined by observing black polyamide microparticles using a scanning electron microscope (SEM, for example, scanning electron microscope JSM-6301NF supplied by JEOL Ltd.), and for 100 black polyamide microparticles, measuring their diameters (particle sizes) and determining an arithmetic average value thereof. Concretely, in order to determine an accurate number-average particle size in consideration of variations in particle size, observation is performed at a magnification such that two or more and less than 100 microparticles are photographed in one image, and the particle sizes are measured. Subsequently, the number-average particle size is calculated by determining the arithmetic average of the particle sizes of 100 microparticles by the following equation. The magnification of such SEM can be set in the range of 100 times to 5,000 times, depending upon the particle size. As concrete examples, in case where the particle size of the black polyamide microparticles is 1 $\mu$m or more and less than 3 $\mu$m, the magnification is preferably 5,000 times, in case of 3 $\mu$m or more and less than 5 $\mu$m, it is preferably 3,000 times or more, in case of 5 $\mu$m or more and less than 10 $\mu$m, it is preferably 1,000 times or more, in case of 10 $\mu$m or more and less than 50 $\mu$m, it is preferably 500 times or more, in case of 50 $\mu$m or more and less than 100 $\mu$m, it is preferably 250 times or more, and in case of 100 $\mu$m or more and 200 $\mu$m or less, it is preferably 100 times or more. Where, in case where the microparticles are not perfectly circular on the image (for example, in case of elliptical shape or in case where aggregates in which the microparticles are gathered irregularly are formed), the longest diameter thereof is measured as the particle size.

[Equation 1]

$$D_n = \left( \sum_{i=1}^{n} R_i \right) / n$$

In the above-described equation, Ri is the particle size of each microparticle, "n: number of measurements" is 100, and Dn is the number-average particle size.

The particle size distribution index (PDI), which is an index showing the width of the particle size distribution of the black polyamide microparticles of the present invention, is preferably 1 to 3, more preferably 1 to 2.5, further preferably 1 to 2.0, particularly preferably 1 to 1.8, extremely preferably 1 to 1.5. Where, the lower limit of the particle size distribution index PDI is theoretically 1. If the particle size distribution index PDI is small, it becomes easy to lay the black polyamide microparticles in a uniform powder layer in the powder bed fusion additive manufacturing, and the formability can be improved.

The particle size distribution index PDI of the black polyamide microparticles is calculated by the following equations using the measurement result of the particle sizes performed at the time of calculating the number-average particle size.

[Equation 2]

$$D_n = \left( \sum_{i=1}^{n} R_i \right) / n$$

$$D_v = \sum_{i=1}^{n} R_i^4 \Big/ \sum_{i=1}^{n} R_i^3$$

$$PDI = D_v / D_n$$

In the above-described equations, Ri is the particle size of each microparticle, "n: number of measurements" is 100, Dn is the number-average particle size, Dv is the volume-average particle size, and PDI is the particle size distribution index.

The sphericity of the black polyamide microparticles of the present invention is preferably 80 or more, more preferably 85 or more, further preferably 90 or more, and particularly preferably 98 or more. If the sphericity is high, since the flowability and filling property when the black polyamide microparticles are laid in a powder layer are improved, it is possible to suppress the occurrence of modeling defects in the modeling by the powder bed fusion additive manufacturing, and a desired formed body can be formed efficiently.

The sphericity of the black polyamide microparticles in the present invention is an arithmetic average value of the sphericities Si of randomly selected 30 particles by a scanning electron microscope and indicates an average sphericity Sm calculated according to the following equation. The sphericity Si is the ratio of the minor axis ai of each particle to the major axis bi perpendicularly intersecting it, and is calculated according to the following equation.

[Equation 3]

$$S_m = \left( \sum_{i=1}^{n} S_i \right) / n$$

$$S_i = (a_i \,/\, b_i) * 100$$

In the above-described equations, Sm is the average sphericity, Si is the sphericity of each microparticle, ai is the minor axis of each microparticle, bi is the major axis of each microparticle, and "n: number of measurements" is 30.

The black polyamide microparticles of the present invention are polyamide microparticles in which carbon black is encapsulated, and the content of carbon black is not particularly limited as long as the black polyamide microparticles of the present invention can be obtained. Assuming that the black polyamide microparticles are used for modeling by a powder bed fusion additive manufacturing, the content is exemplified as follows: if the content of the carbon black is in the range of more than 0 to 5% by mass, it is suitable for modeling by a powder bed fusion additive manufacturing.

In the present invention, it can be confirmed that the carbon black is encapsulated in the black polyamide microparticles, by embedding the black polyamide microparticles with an epoxy resin for electron microscopy and curing them, thereafter preparing an ultrathin piece having a thickness of 0.1 μm, and observing whether the carbon black is present inside the microparticles by using a transmission electron microscope (for example, transmission electron microscope H-7100 supplied by Hitachi, Ltd.).

Further, the black polyamide microparticles of the present invention can be dispersed in a desired dispersion medium to prepare a dispersion.

Although the dispersion medium of the dispersion is not particularly selected as long as the polyamide resin is not dissolved, an aliphatic hydrocarbon-based solvent, an aromatic hydrocarbon-based solvent, an ester-based solvent, a halogen-based solvent, a ketone-based solvent, an alcohol-based solvent, an aprotic polar solvent, a carboxylic acid-based solvent, an ether-based solvent, an ionic liquid, water, and the like can be exemplified.

As these solvents, the following solvents are concretely exemplified. As the aliphatic hydrocarbon-based solvents, pentane, hexane, heptane, octane, nonane, n-decane, n-dodecane, n-tridecane, tetradecane, cyclohexane and cyclopentane can be exemplified. As the aromatic hydrocarbon-based solvents, benzene, toluene, xylene and 2-methylnaphthalene can be exemplified. As the ester-based solvents, ethyl acetate, methyl acetate, butyl acetate, butyl propionate and butyl butyrate can be exemplified. As the halogenated hydrocarbon-based solvents, chloroform, bromoform, methylene chloride, carbon tetrachloride, 1,2-dichloroethane, 1,1,1-trichloroethane, chlorobenzene, 2,6-dichlorotoluene, hexafluoroisopropanol and the like can be exemplified. As the ketone-based solvents, acetone, methyl ethyl ketone, methyl isobutyl ketone, methyl butyl ketone and the like can be exemplified. As the alcohol-based solvents, methanol, ethanol, 1-propanol, 2-propanol and the like can be exemplified. As the aprotic polar solvents, N-methyl-2-pyrrolidone (NMP), dimethylsulfoxide (DMSO), N,N- dimethylformamide (DMF), N,N- dimethylacetamide (DMA), propylene carbonate, trimethyl phosphate, 1,3-dimethyl-2-imidazolidinone, sulfolane and the like can be exemplified. As the carboxylic acid solvents, formic acid, acetic acid, propionic acid, butyric acid, lactic acid and the like can be exemplified. As the ether-based solvents, anisole, diethyl ether, tetrahydrofuran, diisopropyl ether, dioxane, diglyme, dimethoxyethane and the like can be exemplified. As the ionic liquids, 1-butyl-3-methylimidazolium acetate, 1-butyl-3-methylimidazolium hydrogen sulfate, 1-ethyl-3-imidazolium acetate, 1-ethyl-3-methylimidazolium thiocyanate and the like can be exemplified.

From the viewpoint of both good dispersibility originating from affinity with polyamide microparticles and easeness of handling in the industry, preferred solvents among them are aromatic hydrocarbon-based solvents, alcohol-based solvents, ketone-based solvents and water, more preferred solvents are alcohol-based solvents, ketone-based solvents and water, and further preferred solvents are alcohol-based solvents and water. In particular, extremely preferable solvents are toluene, methyl ethyl ketone, ethanol, isopropanol and water. Where, these organic solvents may be used in admixture of a plurality of kinds thereof.

Further, the black polyamide microparticles of the present invention can be dispersed in a desired resin to obtain a resin composition.

As the method for producing the black polyamide microparticles, conventionally known technologies may be employed as long as the black polyamide microparticles of the present invention can be obtained. For example, a method for melt kneading a polyamide resin and carbon black to prepare a master batch resin composition and then making the resin composition into a powder by a mechanical pulverization process such as a ball mill, a beads mill, a jet mill, a mortar or the like, a forcible melt kneading method for melt kneading the above-described master batch and a sea component resin and removing only the sea component, a method for preparing microparticles by spray drying a solution suspended with carbon black in a polyamide solution of a highly volatile solvent, a method for precipitating microparticles by cooling a solution suspended with a polyamide solution and carbon black, etc. can be exemplified. Among these, it is most preferred to obtain the microparticles by the following microparticle formation method utilizing the phase separation phenomenon of the polymer solution. By employing the microparticle formation method utilizing the phase separation phenomenon of the polymer solution, microparticles having a small particle size distribution index can be obtained, and microparticles having a high sphericity can be obtained, which is preferred.

The microparticle formation method utilizing the phase separation phenomenon of a polymer solution is a method in which, in a system that is separated into two phases of a solution phase, in which a polyamide is a main component and carbon black is selectively distributed, and a solution phase, in which a polymer (B) different from the polyamide is a main component, when the carbon black is mixed with a polymer solution prepared by dissolving the polyamide, the polymer (B) and an organic solvent (C), after an emulsion, in which the solution phase, in which the polyamide is a main component and the carbon black is selectively distributed, becomes a dispersed phase, and the solution phase, in which the polymer (B) is a main component, becomes a continuous phase, is formed, by bringing a poor solvent of the polyamide into contact with the emulsion, black polyamide microparticles encapsulated with the carbon black are precipitated.

Here, the solution phase, in which the polyamide is a main component and the carbon black is selectively distributed (hereinafter, referred to as a polyamide solution phase), is a solution phase in which, in a system that is separated into two phases of (i) a solution phase in which the polyamide among two kinds of polymers of the polyamide and the polymer (B) is mainly distributed and (ii) a solution phase in which the polymer (B) among two kinds of polymers of the polyamide and the polymer (B) is mainly distributed, carbon black is selectively distributed in the above-described (i) solution phase in which the polyamide is mainly distributed. Further, the solution phase, in which the polymer (B) is a main component (hereinafter, referred to as a polymer (B) solution phase), is the above-described (ii) solution phase in which the polymer (B) is mainly distributed.

In a system in that the polyamide, the polymer (B) and the organic solvent (C) are contained as components and that is separated into phases of the above-described (i) solution phase in which the polyamide is mainly distributed and the above-described (ii) solution phase in which the polymer (B) is mainly distributed, when carbon black is added as a fourth component, it has been surprisingly found that the carbon black is selectively distributed to the above-described (i) solution phase in which the polyamide is mainly distributed.

Where, carbon black may be added to a solution in which polyamide and polymer (B) are dissolved in an organic solvent (C), or carbon black is added to a mixture of polyamide, polymer (B) and organic solvent (C) and the polyamide and the polymer (B) may be dissolved to form a solution, and in either method, it seems that the carbon black is selectively distributed to the above-described (i) solution phase in which the polyamide is mainly distributed.

Namely, "the system that is separated into two phases of a solution phase, in which a polyamide is a main component and carbon black is selectively distributed, and a solution phase, in which a polymer (B) different from the polyamide is a main component, when the carbon black is mixed with a polymer solution prepared by dissolving the polyamide, the polymer (B) and an organic solvent (C)" means a system that is separated into two phases of a polyamide solution phase in which the carbon black is selectively distributed and a polymer (B) solution phase, when the polyamide, the polymer (B), the organic solvent (C) and the carbon black are mixed.

As the above-described polymer (B), although a thermoplastic resin and a thermosetting resin among polymers different from polyamide can be exemplified, a thermoplastic resin is preferable from the viewpoint of easy dissolution in the organic solvent (C). Concretely, polyethylene oxide, polyethylene glycol, polyvinyl alcohol (which may be fully saponified or partially saponified polyvinyl alcohol), hydroxypropyl cellulose and the like can be exemplified. Preferably, it is polyethylene oxide, polyethylene glycol, or polyvinyl alcohol (which may be fully saponified or partially saponified polyvinyl alcohol), because the particle size distribution of the obtained black polyamide microparticles becomes narrow.

With respect to the molecular weight of the polymer (B), it is preferred to use a polymer having a weight-average molecular weight of 1,000 or more, and by using such a polymer (B), the phase separation into two phases of the polyamide solution phase and the polymer (B) solution phase is induced, and by forming an emulsion, black polyamide microparticles having a sphericity of 80 or more can be obtained. The molecular weight of the polymer (B) is preferably in the range of 1,000 to 10,000,000 in weight-average molecular weight. The upper limit is more preferably 5,000,000 or less, further preferably 2,000,000 or less, and particularly preferably 1,000,000 or less. Further, from the viewpoint of facilitating the phase separation, the lower limit is more preferably 1,000 or more, further preferably 10,000 or more, and particularly preferably 20,000 or more.

The weight-average molecular weight mentioned here indicates a weight-average molecular weight measured by gel permeation chromatography (GPC) using water as a solvent and converted with polyethylene glycol. When it cannot be measured with water, dimethylformamide is used as the solvent, tetrahydrofuran is used when still cannot be measured, and hexafluoroisopropanol is used when still further cannot be measured.

The organic solvent (C) is a solvent dissolving the polyamide and the above-described polymer (B). Here, the solvent dissolving the polymer means a solvent which dissolves the polyamide and the polymer (B) at an amount of more than 1% by mass relatively to the organic solvent (C) at a temperature to be actually carried out, that is, at a temperature at which the polyamide and the polymer (B) are dissolved and mixed. It is preferred that the organic solvent (C) can dissolve the polyamide at least at a metastable condition at a temperature in the process of contacting a poor solvent to obtain black polyamide microparticles. Although the organic solvent (C) in the polyamide solution phase and the organic solvent (C) in the polymer (B) solution phase may be the same or different, preferably they are substantially the same solvent.

Preferable solvents are organic amide-based solvents such as N-methyl-2-pyrrolidone, N,N-dimethylformamide, N,N-dimethylacetamide and N-methylcaprolactam. These solvents may be used solely or in combination of a plurality of kinds. N-methyl-2-pyrrolidone is more preferable from the viewpoint of solubility of polyamide.

The poor solvent of polyamide means one having a solubility of polyamide relative to the solvent of 1% by mass or less, more preferably 0.5% by mass or less, further preferably 0.1% by mass or less.

As the poor solvent, it is preferred to be a poor solvent of polyamide and to one dissolving polymer (B). By this, black polyamide microparticles containing polyamide and carbon black can be efficiently precipitated. Further, it is preferably a poor solvent being mixed uniformly with the above-described organic solvent (C).

Concretely, although it depends upon the kinds of the polyamide and the polymer (B), at least one kind of solvent selected from an aliphatic hydrocarbon-based solvent such as pentane, hexane, heptane, octane, nonane, n-decane, n-dodecane, n-tridecane, cyclohexane, cyclopentane or the like, an aromatic hydrocarbon-based solvents such as benzene, toluene, xylene or the like, an alcohol-based solvent such as methanol, ethanol, 1-propanol, 2-propanol or the like, and water, can be exemplified. From the viewpoint of efficiently obtaining black polyamide microparticles, it is preferably an aromatic hydrocarbon-based solvent, an aliphatic hydrocarbon-based solvent, an alcohol-based solvent or water, more preferably an alcohol-based solvent or water, and most preferably water.

In order to obtain conditions that easily cause phase separation state, it is preferred that the difference between the solubility parameters "SP value" of the polyamide and the polymer (B) is great. In this connection, the difference in SP value is preferably 1 $(J/cm^3)^{1/2}$ or more, more preferably 2 $(J/cm^3)^{1/2}$ or more, further preferably 3 $(J/cm^3)^{1/2}$ or more, particularly preferably 5 $(J/cm^3)^{1/2}$ or more, and extremely preferably 8 $(J/cm^3)^{1/2}$ or more. When the SP value is within this range, because phase separation easily occurs easily, black polyamide microparticles having a higher content of polyamide can be obtained. Although there is no particular limitation as long as both the polyamide and the polymer (B) are soluble in the organic solvent (C), the upper limit of the difference in SP value is preferably 20 $(J/cm^3)^{1/2}$ or less, more preferably 15 $(J/cm^3)^{1/2}$ or less, and further preferably 10 $(J/cm^3)^{1/2}$ or less.

Where, the SP value referred to here is calculated based on Fedor's estimation method and is calculated based on the cohesive energy density and the molar molecular volume (hereinafter, also referred to as calculation method) ("SP value, base, application and calculation method", Hideki Yamamoto, published by Johokiko Co., Ltd., Mar. 31, 2005). If the calculation cannot be performed by this method, the SP value is calculated from measurements based on the experiment determining whether it is dissolved in a solvent with a known solubility parameter (hereinafter, also referred to as experimental method), and the calculated value can be used instead ("Polymer Handbook Fourth Edition", J. Brand, published by Wiley, 1998).

In order to select the condition under which the phase separation state is established, it can be determined by a three component phase diagram which can be prepared by a simple preliminary experiment by observing states in which the ratio of the three components of polyamide, polymer (B) and organic solvent (C) for dissolving them is changed.

In the preparation of the phase diagram, by mixing and dissolving the polyamide, the polymer (B) and the organic solvent (C) at an arbitrary ratio, and when the mixture is left at a stationary state, by carrying out determination of whether or not an interface occurs at least three points, preferably 5 points or more, more preferably 10 points or more, and by distinguishing the region to be separated into two phases and the region to become one phase, it becomes possible to discriminate conditions under which phase separation occurs.

In this case, in order to determine whether or not the phase separation state is established, the polyamide, the polymer (B) and the organic solvent (C) are mixed at an arbitrary ratio at a temperature and a pressure at which an emulsion is actually formed, after the polyamide and the polymer (B) are thoroughly dissolved, a sufficient stirring is carried out, and it is left at a stationary state for 3 days to confirm whether or not macroscopically phase separation occurs. However, in case where a sufficiently stable emulsion is formed, macroscopic phase separation may not be achieved even if left at stationary state for 3 days. In such a case, the phase separation is determined by determination of microscopic phase separation using an optical microscope/phase contrast microscope or the like.

In order to determine whether or not carbon black is selectively distributed in the polyamide solution phase, after the confirmation of the above-described phase separation state, an arbitrary amount of carbon black is added relatively to an arbitrary ration of the polyamide, the polymer (B) and the organic solvent (C) which have been confirmed with phase separation state, the polymer solution in which the carbon black is dispersed is sufficiently stirred at the temperature and the pressure at the time of actually forming the emulsion and then left at a stationary state to promote the phase separation of the polymer solution, and it is carried out to confirm by observation whether or not only the solution phase mainly composed of polyamide is colored with the carbon black.

Although the concentration of each of the polyamide and the polymer (B) relative to the organic solvent (C) is based on the premise that it is within a possible range to be dissolved in the organic solvent (C), relatively to the total mass, the lower limit of each of them is preferably more than 1% by mass, more preferably 2% by mass or more, further preferably 3% by mass or more, and still further preferably 5% by mass or more. Further, the upper limit thereof is preferably 50% by mass or less, more preferably 30% by mass or less, and further preferably 20% by mass or less.

The interfacial tension between the two phases of the polyamide solution phase and the polymer (B) solution phase obtained by the phase separation is small because both phases are composed of mainly organic solvent, and due to its properties, the produced emulsion is stable and an emulsion with a very narrow droplet size distribution can be obtained, and therefore, the particle size distribution of the obtained black polyamide microparticles is considered to become narrow. This tendency is remarkable at the time of phase separation by dissolving both the polyamide and the polymer (B) by using a single solvent as the organic solvent (C).

Since the interfacial tension between the two phases separated by the phase separation is too small, it cannot be directly measured by a usually employed hanging-drop method or the like in which a different type of solution is added to a solution, but the interfacial tension can be estimated by estimation from surface tensions of the respective phases with air. When the surface tensions of the respective phases with air are referred to as $r_1$ and $r_2$, the interfacial tension $r_{1/2}$ can be estimated by the absolute value of $r_{1/2} = r_1 - r_2$.

In this case, as to the preferable range of $r_{1/2}$, the upper limit thereof is preferably 10 mN/m or less, more preferably 5 mN/m or less, further preferably 3 mN/m or less, particularly preferably 2 mN/m or less is there. Further, the lower limit thereof is more than 0 mN/m.

The viscosity ratio of the phase-separated two phases influences the number-average particle size and the particle size distribution of the obtained black polyamide microparticles. As a preferable range of the viscosity ratio, the lower limit thereof is preferably 0.1 or more, more preferably 0.2 or more, further preferably 0.3 or more, still further preferably 0.5 or more, and extremely preferably 0.8 or more. The upper limit of the viscosity ratio is preferably 10 or less, more preferably 5 or less, further preferably 3 or less, particularly preferably 1.5 or less, and extremely preferably 1.2 or less. The viscosity ratio of the two phases referred to here is defined as a ratio of the viscosity of the polyamide solution phase/the viscosity of the polymer (B) solution phase under the temperature condition to be actually carried out.

On the basis of the conditions under which the phase separation state is obtained as described above, a solution in which carbon black is added to a polymer solution served to phase separation is prepared, and after mixing to form an emulsion, it is served to a process for producing black polyamide microparticles .

In the method for producing black polyamide microparticles of the present invention, preparation of a polymer solution, formation of an emulsion and particle formation process are carried out in a usual reaction vessel.

In the process of preparing the polymer solution, after the polyamide, the polymer (B) and the organic solvent (C) having arbitrary compositions exhibiting phase separation property, and further carbon black are mixed, the polyamide and the polymer (B) are completely dissolved in the organic solvent (C), thereby obtaining a polymer solution mixed with carbon black and served to phase separation. The temperature at which this process is carried out is not lower than the temperature at which the polyamide and the polymer (B) are dissolved in the organic solvent (C), and although its preferred temperature cannot be unequivocally determined because it varies depending upon the kind of the polymer, it is preferably in a range of 0°C to 300°C from the viewpoint of industrial feasibility. The lower limit of the temperature range is preferably 120°C or higher, more preferably 140°C or higher, further preferably 160°C or higher, and particularly preferably 180°C or higher, from the viewpoint of the solubility of the polyamide and the polymer (B). Further, the upper limit of the temperature range is preferably 250°C or lower, more preferably 225°C or lower, and further preferably 200°C or lower.

The polymer solution obtained in the above-described process is stirred and mixed, and emulsion formation is carried out. The temperature of the emulsion formation process is not particularly limited as long as it is not lower than the temperature at which the polyamide and the polymer (B) are dissolved in the organic solvent (C), but it is preferably from 0°C to 300°C from the viewpoint of industrial feasibility. Although the lower limit of the temperature range cannot be determined unequivocally because the adequate temperature varies depending upon the kind of the polyamide or the organic solvent (C), there is no particular limitation as long as it is higher than the temperature at which the polyamide is precipitated.

If concretely exemplified, the lower limit of the temperature range of the emulsion formation process is preferably 120°C or higher, more preferably 140°C or higher, further preferably 160°C or higher, and particularly preferably 180°C or higher. The upper limit of the temperature range is preferably 250°C or lower, more preferably 225°C or lower, and further preferably 200°C or lower.

From the viewpoint of industrial feasibility, the pressure of the emulsion formation process is in the range of normal pressure to 100 atm (10.1 MPa). The upper limit is preferably 75 atm (7.5 MPa) or less, more preferably 50 atm (5.0 MPa) or less, and particularly preferably 30 atm (3.0 MPa) or less, although it depends upon the saturated vapor pressure of the polymer solution at the temperature at the time of the emulsion formation process. Further, the preferred lower limit is not less than the saturated vapor pressure of the polymer solution at the temperature at the time of the emulsion formation process.

Further, it is preferred that the emulsion formation process is performed under an inert gas atmosphere. As the inert gas, nitrogen, helium, argon or carbon dioxide is preferable, more preferably nitrogen or argon.

In order to obtain a shearing force enough to form an emulsion, it is sufficient to use stirring by a known method, and a liquid phase stirring method by a stirring blade, a stirring method by a continuous twin-screw mixer, a mixing method by a homogenizer, ultrasonic irradiation or the like can be used.

In case of stirring by a stirring blade, although depending upon the shape of the stirring blade, the stirring speed is preferably in a range of 50 rpm to 1,200 rpm, more preferably in a range of 100 rpm to 1,000 rpm, further preferably in a range of 200 rpm to 800 rpm, particularly preferably in a range of 300 rpm to 600 rpm.

As the type of the stirring blade, a propeller type, a paddle type, a flat paddle type, a turbine type, a double cone type, a single cone type, a single ribbon type, a double ribbon type, a screw type, a helical ribbon type or the like can be exemplified, but it is not particularly limited thereto as long as a sufficient shearing force can be applied to the system. Further, in order to perform an efficient stirring, a baffle plate or the like may be installed in the vessel.

Further, in order to generate an emulsion, it is not always necessary to use an agitator, and an apparatus such as an emulsifier or a disperser may be used. As concrete examples, a batch type emulsifier such as a homogenizer (supplied by IKA Japan Corporation), Polytron (supplied by Kinematica, Inc.) or T.K. Autohomomixer (supplied by Tokushu Kika Kogyo Co., Ltd.), Ebara Milder (supplied by Ebara Corporation), T.K. Filmics, T.K. Pipeline Homomixer (supplied by Tokushu Kika Kogyo Co., Ltd.), Colloid mill (supplied by Nippon Seiki Seisakusho Co., Ltd.), Slasher, Trigonal Wet Sodium Grinder (supplied by Nippon Coke & Engineering Co., Ltd.), a ultrasonic homogenizer, a static mixer and the like can be exemplified.

The emulsion thus obtained is served to a microparticle formation process in which microparticles are subsequently precipitated. By bringing the poor solvent into contact with the emulsion formed in the above-described process, the black polyamide microparticles are precipitated with a diameter corresponding to the droplet diameter of the emulsion.

Although the temperature in the reactor when contacting the poor solvent is not particularly restricted as long as it is a temperature or higher at which the polyamide and the polymer (B) are dissolved in the organic solvent (C), it is preferably in a range of 0°C to 300°C from the viewpoint of industrial feasibility. The lower limit of the temperature range cannot be determined unequivocally because the adequate temperature varies depending upon the kind of the polyamide or the organic solvent (C), but there is no particular limitation as long as it is higher than the temperature at which the polyamide precipitates. If concretely exemplified, the lower limit of the temperature range is preferably 120°C or higher, more preferably 140°C or higher, further preferably 160°C or higher, and particularly preferably 180°C or higher. The upper limit of the temperature range is preferably 250°C or lower, more preferably 225°C or lower, and further preferably 200°C or lower.

The method of contacting the poor solvent with the emulsion may be a method of pouring the emulsion in the poor solvent or a method of placing the poor solvent in the emulsion, but the method of pouring the emulsion in the poor solvent is more preferred.

In this connection, the method of pouring the poor solvent is not particularly restricted as long as the black polyamide microparticles of the present invention can be obtained, and any of a continuous dropping method, a split addition method and a batch addition method may be used. In order to prevent the emulsion from agglomerating, fusing or coalescing when the poor solvent is added, thereby the particle size distribution of the obtained black polyamide microparticles being widened and clusters exceeding 200 μm being generated, it is preferable to use a continuous dropping method or a split dropping method, and in order to carry out industrially efficiently, the continuous dropping method is most preferable.

The time for adding the poor solvent is preferably from 5 minutes to 50 hours. It is more preferably from 10 minutes to 10 hours, further preferably from 30 minutes to 5 hours, and particularly preferably from 1 hour to 5 hours. By adding the poor solvent within this time range, when black polyamide microparticles are precipitated from the emulsion, agglomeration between the microparticles can be suppressed, black polyamide microparticles having a uniform particle size with a narrow particle size distribution can be obtained. If the poor solvent is added in a shorter time than this range, there is a possibility that accompanying with the agglomerating, fusing or coalescing of the emulsion, the particle size distribution of the obtained black polyamide microparticles may become wider or clusters may be formed. Further, if it is carried out for a longer time than this range, it is industrially disadvantageous.

Although the optimum amount of the poor solvent to be added varies depending upon the molecular weight of the polymer (B) and the solubility of the polyamide in the organic solvent (C), usually it is preferably from 10 parts to 1,000 parts by mass relative to the emulsion of 100 parts by mass. A more preferable upper limit is 500 parts by mass or less, further preferably 300 parts by mass or less, particularly preferably 200 parts by mass or less, and most preferably 100 parts by mass or less. Further, the lower limit is preferably 10 parts by mass or more, and more preferably 50 parts by mass or more.

The contact time between the poor solvent and the emulsion may be a time sufficient for precipitation of the microparticles, but in order to cause sufficient precipitation and to obtain efficient productivity, the time is preferably from 5 minutes to 50 hours after the completion of addition of the poor solvent, more preferably from 5 minutes to 10 hours, further preferably from 10 minutes to 5 hours, particularly preferably from 20 minutes to 4 hours, and most preferably from 30 minutes to 3 hours.

The dispersion of the black polyamide microparticles thus prepared is solid-liquid separated by a usually known method such as filtration, vacuum filtration, pressure filtration, centrifugal separation, centrifugal filtration, spray drying or the like, thereby recovering the black polyamide microparticles.

The solid-liquid separated microparticles are subjected, as needed, to purification by performing washing with a solvent or the like and removing impurities and the like adhered or contained.

When the obtained dispersion of black polyamide microparticles is served to solid-liquid separation, for example, by vacuum filtration, the filtrated liquid after the solid-liquid separation of the microparticles is transparent. This is because sole carbon black separated from the polyamide microparticles is not present in the black polyamide microparticles obtained by this method, and all of the carbon black is compounded with the polyamide microparticles.

This is because, in the system that is separated into two phases of the solution phase in which polyamide is its main component and carbon black is selectively distributed and the solution phase in which polymer (B) is its main component when the polymer solution, in which the polyamide, the polymer (B) different from the polyamide and the organic solvent (C) are dissolved, is mixed with carbon black, after forming the emulsion, by bringing the poor solvent of polyamide into contact with the emulsion, polyamide microparticles encapsulated with carbon black are precipitated, thereby producing the black polyamide microparticles of the present invention.

As the polyamide from which the black polyamide microparticles can be produced by this production method, a 3-membered or more lactam, a polymerizable aminocarboxylic acid, a dibasic acid and a diamine or a salt thereof, or a polyamide obtained by polycondensation of a mixture thereof, can be exemplified.

As examples of such polyamides, a crystalline polyamide such as polycaproamide (polyamide 6), polyhexamethylene adipamide (polyamide 66), polypentamethylene adipamide (polyamide 56), polytetramethylene sebacamide (polyamide 410), polypentamethylene sebacamide (polyamide 510), polyhexamethylene sebacamide (polyamide 610), polydecamethylene sebacamide (polyamide 1010), polyundecamide (polyamide 11), polydodecaamide (polyamide 12), polypentamethylene terephthalamide (polyamide 5 T), polyhexamethylene terephthalamide (polyamide 6T), polydecamethylene terephthalamide (polyamide 10T), a copolymer of 4,4'-diaminodicyclohexylmethane and dodecadioic acid (for example, "TROGAMID (registered trademark)" CX7323, supplied by Daicel-Evonik Ltd.) and the like can be exemplified.

In case where the black polyamide microparticles obtained by this production method are suitably used for modeling by the powder bed fusion additive manufacturing, polyamide 11, polyamide 12, polyamide 6, polyamide 66 and polyamide 1010 are preferred, and polyamide 11 or polyamide 12 is particularly preferred as the polyamide.

In order to produce black polyamide microparticles suitable for modeling by the powder bed fusion additive manufacturing, it is preferred to use carbon black having a DBP absorption of 200 ml/100 g or less, and by using such carbon black, it is possible to produce black polyamide microparticles having a temperature difference $\Delta T$ between Tm and Tc of particles of 25°C or more.

As the carbon black used in this production method, the DBP absorption is preferably 200 ml/100 g or less, more preferably 150 ml/100 g or less, further preferably 100 ml/100 g or less, particularly preferably 75 ml/100 g or less, and extremely preferably 50 ml/100 g or less. By using such carbon black, it is possible to produce black polyamide microparticles having a temperature difference $\Delta T$ between Tm and Tc of particles of 25°C or more.

As such carbon black, carbon black powder such as furnace black, acetylene black, thermal black or channel black can be exemplified, and although there is no particular restriction as long as the black polyamide microparticles of the present invention can be produced, it is preferably furnace black, thermal black or channel black, and more preferably furnace black.

In this method, recycling, in which the organic solvent (C) and the polymer (B) separated in the solid-liquid separation process performed when obtaining the microparticles are utilized again, can be carried out.

The solvent separated in the solid-liquid separation process is a mixture of the polymer (B), the organic solvent (C) and the poor solvent. By removing the poor solvent from this solvent, it can be reused as a solvent for emulsion formation. As a method for removing the poor solvent, a known method can be used. Concretely, simple distillation, vacuum distillation, precision distillation, thin film distillation, extraction, membrane separation and the like can be exemplified, and preferably a method by simple distillation, vacuum distillation or precision distillation is employed.

When performing a distillation operation such as simple distillation or vacuum distillation, because similarly to in the production of black polyamide microparticles, heat is applied to the system and there is a possibility of promoting thermal decomposition of the polymer (B) and the organic solvent (C), it is preferable to carry out it at a condition in the absence of oxygen as much as possible, more preferably under a condition of an inert atmosphere. Concretely, it is preferably carried out under an atmosphere condition of nitrogen, helium, argon or carbon dioxide. Further, when performing the distillation operation, a phenolic compound may be added as an antioxidant.

When recycling a solvent or the like, it is preferred to remove the poor solvent as much as possible. Concretely, in the solvent after removal of the poor solvent, it is better that the residual amount of the poor solvent is 10% by mass or less relatively to the total amount of the organic solvent (C) and the polymer (B), preferably 5% by mass or less, more preferably 3% by mass or less, and particularly preferably 1% by mass or less. In case of exceeding this range, it is not preferred because the particle size distribution of the obtained black polyamide microparticles becomes wider or the microparticles agglomerate when reused as a solvent for emulsion formation. The amount of the poor solvent in the solvent to be recycled can be determined by a known method such as gas chromatography or Karl Fischer method.

In the operation of removing the poor solvent, since actually the organic solvent (C) or the polymer (B) may be lost, when reusing the recovered solvent, it is preferred to appropriately readjust its composition.

Thus, since the black polyamide microparticles of the present invention are encapsulated with carbon black and the temperature difference $\Delta T$ between the melting temperature Tm and the cooling crystallization temperature Tc of the polymer microparticles is 25°C or more, the microparticles exhibit an excellent formability in the modeling by the powder bed fusion additive manufacturing, and they are suitable for modeling of a black formed body. Further, since the black polyamide microparticles of the present invention are encapsulated with carbon black and are not a mixed powder such as a dry blend, the microparticles are excellent in recyclability when used for modeling by the powder bed fusion additive manufacturing, and economically advantageous. Furthermore, since the black polyamide microparticles of the present invention have a suitable particle size for use in the powder bed fusion additive manufacturing, by utilizing the excellent formability and recyclability as described above, they can be served to the modeling by the powder bed fusion additive manufacturing.

As described above, the black polyamide microparticles of the present invention can provide practically excellent formability and recyclability, particularly in modeling by the powder bed fusion additive manufacturing.

Further, the black polyamide microparticles of the present invention is not limited to the application in the powder bed fusion additive manufacturing, and can be practically used in various applications.

For example, since the black polyamide microparticles of the present invention are encapsulated with carbon black, they are excellent in antistatic property and can be suitably used as an additive or a member for preventing static electricity charging.

They can be used for other applications such as materials for molding processing typified by injection molding, microfabrication and the like; electronic/electric parts/members and electronics article casing members obtained by using the materials; conductive microparticles or conductive members, thermally conductive microparticles or thermally conductive members, or antistatic microparticle or antistatic members utilizing the properties of carbon black; additives such as thickeners at various molding processing and molded dimension stabilizers; coating films or materials for coating as forms of a dispersion, a coating liquid, a paint and the like; applications for flowability improvers, lubricants, abrasives and thickeners as powder; applications for lubricity improvers for plastic films or sheets, antiblocking agents, gloss adjusting agents and mat finishing agents; various modifiers such as light diffusing materials for plastic films or sheets or lenses, surface hardness improvers and toughness improvers; various inks; additives for use as gloss adjusting agents, mat finishing materials and the like for toners; additives for use as gloss adjusting agent, mat finishing materials and the like for various coating materials; spacer applications for liquid crystal display operation; fillers for chromatography, substrates and additives for cosmetics; catalysts and carriers for chemical reaction; gas adsorbents, and the like.

Examples

Hereinafter, the present invention will be explained based on Examples, but the present invention is not limited thereto.

(Determination of Number-average particle size)

The number-average particle size Dn of the black polyamide microparticles was determined by observing the black polyamide microparticles using a scanning electron microscope (Scanning Electron Microscope JSM-6301NF supplied by JEOL Ltd.), and measuring the diameters (particle sizes) of 100 black polyamide microparticles and determining it as an arithmetic average value thereof. Concretely, in order to obtain an accurate number-average particle size in consideration of variations in particle size, observation was performed at a magnification such that two or more and less than 100 particles were captured in one image, and the particle sizes were measured. Subsequently, the number-average particle size was calculated by determining the arithmetic average of the particle sizes of 100 microparticles by the following equation. In case where the particles were not perfectly circular on the image (for example, in case of elliptical shape or in case of forming agglomerates in which particles were irregularly gathered), the longest diameter thereof was determined as the particle size.

[Equation 4]

$$D_n = \left( \sum_{i=1}^{n} R_i \right) / n$$

In the above-described equation, Ri is the particle size of each individual particle, n is the number of measurements: 100 and Dn is the number-average particle size.

(Calculation of Particle size distribution index)

The particle size distribution index PDI of the black polyamide microparticles was calculated by the following equation using the measurement result of the particle sizes performed at the time of calculating the number-average particle size.

[Equation 5]

$$D_n = \left( \sum_{i=1}^{n} R_i \right) / n$$

$$D_v = \sum_{i=1}^{n} R_i^4 \Big/ \sum_{i=1}^{n} R_i^3$$

$$PDI = D_v / D_n$$

In the above-described equation, Ri is the particle size of each particle, n is the number of measurements: 100, Dn is the number-average particle size, Dv is the volume-average particle size, and PDI is the particle size distribution index.

(Determination of Sphericity)

The sphericity of the black polyamide microparticles is an arithmetic average value of the sphericities Si of 30 randomly selected particles by a scanning electron microscope and was calculated according to the following equation. The sphericity Si is a ratio of the minor axis ai of each individual microparticle to the major axis bi perpendicularly intersecting the minor axis and was calculated according to the following equation.

[Equation 6]

$$S_m = \left(\sum_{i=1}^{n} S_i\right)/n$$

$$S_i = (a_i / b_i) * 100$$

In the above-described equation, Sm is the average sphericity, Si is the sphericity of each individual particle, ai is the minor axis of each individual particle, bi is the major axis of each individual particle, and n is the number of measurements: 30.

(Observation of Carbon black inside the microparticles)

Confirmation that carbon black was encapsulated in the black polyamide microparticles was carried out by embedding the black polyamide microparticles with an epoxy resin for electron microscopy and curing it and thereafter forming an ultrathin piece with a thickness of 0.1 $\mu$m, and observing whether carbon black was present inside the microparticles using a transmission electron microscope (transmission electron microscope H-7100 supplied by Hitachi, Ltd.).

(Determination of Melting temperature Tm and Cooling crystallization temperature Tc)

The melting temperature Tm and the cooling crystallization temperature Tc of the black polyamide microparticles were determined by using differential scanning calorimetry (DSC; differential scanning calorimeter Q20, supplied by TA Instruments Co., Ltd.), after elevating in temperature from 0°C to 250°C at a temperature elevation rate of 20°C/min, holding at 250°C for 3 minutes, cooling to 0°C at a cooling rate of 20°C/min, holding at 0°C for 3 minutes, and elevating in temperature again to 250°C at a temperature elevation rate of 20°C/min. From the obtained DSC chart, the apex temperature of the exothermic peak of the temperature lowering first run was taken as the cooling crystallization temperature Tc, and the apex temperature of the endothermic peak of the temperature elevating second run was taken as the melting temperature Tm.

(Evaluation of Antistatic Property of microparticles)

5.0 g of microparticles were weighed and placed in a bag made of polyethylene with a chuck (length 70 mm, width 50 mm, thickness 0.04 mm), and then, the chuck was closed at a state where air was contained inside the bag. Subsequently, the polyethylene bag containing the microparticles was held at a condition parallel to the ground and swung reciprocally 15 times in the horizontal direction. Thereafter, while holding the chuck portion of the polyethylene bag, the bag was raised gently vertically, and the internal microparticles were allowed to fall freely to the bottom of the bag. At this time, the amount of microparticles adhering to the inside of the vertically raised polyethylene bag and the amount of microparticles accumulated in the corner of the upper portion of the bag were visually observed. The antistatic property of the microparticles was evaluated on the assumption that the smaller the amount of adhered and accumulated microparticles was, the better the antistatic property was.

[Example 1]

9.9 parts by mass of polyamide 12 ("Lilsamide (registered trademark)" AESNO TL, supplied by Arkema Co., Ltd.), 7 parts by mass of polyvinyl alcohol (G type "GOHSENOL (registered trademark)" GM-14, weight-average molecular weight 29,000, supplied by Nippon Synthetic Chemical Industry Co., Ltd.) as the polymer (B), 83 parts by mass of N-methyl-2-pyrrolidone as the organic solvent (C), and 0.1 part by mass of Asahi #15 (supplied by Asahi Carbon Co., Ltd., DBP absorption: 41 ml/100 g) as the carbon black, were added into a 1 L pressure-resistant glass autoclave (supplied by Taiatsu Techno Corporation, Hyper Glaster, TEM-V1000N), and using a helical ribbon blade as a stirring blade, while stirring at a rotational speed of 200 rpm, the temperature was elevated up to 180°C over a period of about 30 minutes, and thereafter, the mixture was stirred at a rotational speed of 350 rpm for 2 hours while being kept at 180°C. Subsequently, while stirring at 350 rpm, 100 parts by mass of ion exchanged water as a poor solvent (D) was dropped at a rate of 0.83 parts by mass/min via a liquid feed pump to obtain a suspension. The obtained suspension was subjected to solid-liquid separation by vacuum filtration, washed with 100 parts by mass of ion-exchanged water, and the filtered solid was vacuum-dried at 80°C to obtain black powder of black polyamide microparticles. The filtrated liquid after the vacuum filtration was transparent, and contamination of carbon black could not be found. With respect to the obtained black polyamide microparticles, when the inside of the microparticles was observed with a transmission electron microscope, the state was confirmed in that the carbon black was encapsulated in the microparticles. The number-average particle size Dn of the obtained black polyamide microparticles was 17 μm, the particle size distribution index PDI was 1.4, the sphericity Sm was 96%, and the temperature difference ΔT between the melting temperature Tm and the cooling crystallization temperature Tc was 33.4°C.

Where, in the above-described process, an experiment for confirming that an emulsion was actually formed was separately performed. The above-described polyamide, polymer (B) and organic solvent (C) were placed in a pressure-resistant test tube at the above-described composition ratio and heated to 180°C while stirring to dissolve them, thereby obtaining a polymer solution. When the obtained polymer solution was sampled and observed as to the form using a digital microscope (VHX-100, supplied by Keyence Corporation), the formation of an emulsion was confirmed.

Subsequently, the above-described polyamide, polymer (B), organic solvent (C) and carbon black were placed in a pressure-resistant test tube at the above-described composition ratio and heated to 180°C while stirring to mix them, and after confirming that they were completely dissolved, the stirring was stopped, and the mixture was left in a stationary state at 180°C for 3 days to promote phase separation. As a result of leaving in a stationary state, it was confirmed that the polymer solution was phase-separated into two phases of a black upper phase in which carbon black was selectively distributed and a transparent lower phase in which carbon black was not distributed.

[Example 2]

The microparticles were formed in the same manner as in Example 1 other than conditions where, as the raw materials, 9.9 parts by mass of polyamide 12 ("Lilsamide (registered trademark)" AESNO TL, supplied by Arkema Co., Ltd.), 7 parts by mass of polyvinyl alcohol (G type "GOHSENOL (registered trademark)" GM-14, weight-average molecular weight 29,000, supplied by Nippon Synthetic Chemical Industry Co., Ltd.) as the polymer (B), 83 parts by mass of N-methyl-2-pyrrolidone as the organic solvent (C), and 0.1 part by mass of # 1000 (supplied by Mitsubishi Chemical Corporation, DBP absorption: 49 ml/100 g) as the carbon black, were used. The filtrated liquid after solid-liquid separation was transparent, and no carbon black was found in the filtrated liquid. From the observation by a transmission electron microscope, it was confirmed that the carbon black was encapsulated in the microparticles. The number-average particle size Dn of the obtained black polyamide microparticles was 26 μm, the particle size distribution index PDI was 1.2, the sphericity Sm was 97%, and the temperature difference ΔT between the melting temperature Tm and the cooling crystallization temperature Tc was 29.7°C. Where, similarly to in Example 1, by the experiment using a pressure resistant test tube, the emulsion formation at the above-described composition and the selective distribution of carbon black were separately confirmed.

[Example 3]

The microparticles were formed in the same manner as in Example 1 other than conditions where, as the raw materials, 9.9 parts by mass of polyamide 12 ("Lilsamide (registered trademark)" AESNO TL, supplied by Arkema Co., Ltd.), 7 parts by mass of polyvinyl alcohol (G type "GOHSENOL (registered trademark)" GM-14, weight-average molecular weight 29,000, supplied by Nippon Synthetic Chemical Industry Co., Ltd.) as the polymer (B), 83 parts by mass of N-methyl-2-pyrrolidone as the organic solvent (C), and 0.1 part by mass of # 2600 (supplied by Mitsubishi Chemical Corporation, DBP absorption: 77 ml/100 g) as the carbon black, were used. The filtrated liquid after solid-liquid separation was transparent, and no carbon black was found in the filtrated liquid. From the observation by a transmission electron microscope, it was confirmed that the carbon black was encapsulated in the microparticles. The number-average particle size Dn of the obtained black polyamide microparticles was 21 μm, the particle size distribution index PDI was 1.4, the sphericity Sm was 96%, and the temperature difference ΔT between the melting temperature Tm and the cooling crystallization temperature Tc was 28.0°C. Where, similarly to in Example 1, by the experiment using a pressure resistant test tube, the emulsion formation at the above-described composition and the selective distribution of carbon black were separately confirmed.

[Comparative Example 1]

The microparticles were formed in the same manner as in Example 1 other than conditions where, as the raw materials, 9.9 parts by mass of polyamide 12 ("Lilsamide (registered trademark)" AESNO TL, supplied by Arkema Co., Ltd.), 7 parts by mass of polyvinyl alcohol (G type "GOHSENOL (registered trademark)" GM-14, weight-average molecular weight 29,000, supplied by Nippon Synthetic Chemical Industry Co., Ltd.) as the polymer (B), 83 parts by mass of N-methyl-2-pyrrolidone as the organic solvent (C), and 0.1 part by mass of Ketjenblack EC-600JD (supplied by Lion Corporation, DBP absorption: 495 ml/100 g) as the carbon black, were used. The filtrated liquid after solid-liquid separation was transparent, and no carbon black was found in the filtrated liquid. From the observation by a transmission electron microscope, it was confirmed that the carbon black was encapsulated in the microparticles. The number-average particle size Dn of the obtained black polyamide microparticles was 35 $\mu$m, the particle size distribution index PDI was 1.3, the sphericity Sm was 98%, and the temperature difference $\Delta$T between the melting temperature Tm and the cooling crystallization temperature Tc was 24.1°C. Where, similarly to in Example 1, by the experiment using a pressure resistant test tube, the emulsion formation at the above-described composition and the selective distribution of carbon black were separately confirmed. The black polyamide microparticles obtained in this Comparative Example are not suitable for use as a material for modeling by a powder bed fusion additive manufacturing, because the $\Delta$T is less than 25°C.

[Comparative Example 2]

100 parts by mass of polyamide 12 ("Rilsamide (registered trademark)" AESNO TL, supplied by Arkema Co., Ltd.) and 1 part by mass of Asahi #15 (supplied by Asahi Carbon Co., Ltd., DBP absorption: 41 ml/100 g) as the carbon black were melt-kneaded at 240°C using a twin-screw extruder and pelletized to obtain polyamide 12 pellets containing carbon black. The obtained pellets were freeze pulverized under the conditions of a rotational speed of 8600 rpm, a clearance of 2 mm, and a temperature of -90°C, and the freeze pulverization treatment was repeated four times to obtain a powdery substance having an indefinite shape. The number-average particle size Dn of the obtained black polyamide powdery substance was 298 $\mu$m, the particle size distribution index PDI was 5.5, the sphericity Sm was 62%, and the temperature difference $\Delta$T between the melting temperature Tm and the cooling crystallization temperature Tc was 22.0°C. The black polyamide powdery substance obtained in this comparative example was not suitable for use, in particular, as a material for modeling by a powder bed fusion additive manufacturing, because the average-particle size is 200 $\mu$m or more.

[Comparative Example 3]

When The microparticles were formed in the same manner as in Example 1 other than conditions where, as the raw materials, 10 parts by mass of polyamide 12 ("Lilsamide (registered trademark)" AESNO TL, supplied by Arkema Co., Ltd.), 7 parts by mass of polyvinyl alcohol (G type "GOHSENOL (registered trademark)" GM-14, weight-average molecular weight 29,000, supplied by Nippon Synthetic Chemical Industry Co., Ltd.) as the polymer (B), and 83 parts by mass of N-methyl-2-pyrrolidone as the organic solvent (C), were used, and carbon black was not added, white polyamide microparticles were obtained which have a number-average particle size Dn of 18 $\mu$m, a particle size distribution index PDI of 1.3, and a sphericity Sm of 97%. Where, similarly to in Example 1, by the experiment using a pressure resistant test tube, the emulsion formation at the above-described composition was confirmed.

[Table 1]

| | Raw material | | Black polyamide microparticle | | | | | |
| --- | --- | --- | --- | --- | --- | --- | --- | --- |
| | Polyamide | Carbon black DBP absorption (mL/100g) | Number-average particle size Dn (μm) | Particle size distribution index PDI(-) | Sphericity Sm (%) | Melting temperature Tm (°C) | Cooling crystallization temperature Tc (°C) | ΔT=Tm-Tc(°C) |
| Example 1 | polyamide 12 | 41 | 17 | 1.4 | 96 | 176.3 | 142.9 | 33.4 |
| Example 2 | polyamide 12 | 49 | 26 | 1.2 | 97 | 176.6 | 146.9 | 29.7 |
| Example 3 | polyamide 12 | 77 | 21 | 1.4 | 96 | 176.7 | 148.6 | 28.0 |
| Comparative Example 1 | polyamide 12 | 495 | 35 | 1.3 | 98 | 175.3 | 151.2 | 24.1 |
| Comparative Example 2 | polyamide 12 | 41 | 298 | 5.5 | 62 | 175.2 | 153.2 | 22.0 |
| | Raw material | | White polyamide microparticle | | | | | |
| Comparative Example 3 | polyamide 12 | - | 18 | 1.3 | 97 | 176.0 | 141.1 | 34.9 |

[Example 4]

With respect to the black polyamide microparticles of Examples 1 to 3 and the white polyamide microparticles of Comparative Example 3, the antistatic properties of the microparticles were evaluated. The black polyamide microparticles of Examples 1 to 3 scarcely adhered to the inside of the polyethylene bag, and microparticles did not accumulate in the corners of the upper portion of the bag, and they showed excellent antistatic properties. The white polyamide microparticles of Comparative Example 3 adhered to the inside of the polyethylene bag or accumulated in the corners of the upper portion of the bag, thereby failing to fall therefrom, and the antistatic property was poor.

Industrial Applicability

The black polyamide microparticles of the present invention are suitable particularly for use in a powder bed fusion additive manufacturing.

**Claims**

1. Polyamide microparticles encapsulated with carbon black, having a number-average particle size Dn of 1-200 $\mu$m and a temperature difference $\Delta T$ ($\Delta T=Tm-Tc$) between a melting temperature Tm and a cooling crystallization temperature Tc of 25°C or more.

2. The polyamide microparticles according to claim 1, wherein the polyamide of said polyamide microparticles is polyamide 11 or polyamide 12.

3. The polyamide microparticles according to claim 1 or 2, wherein a particle size distribution index PDI is 1 to 3.

4. The polyamide microparticles according to any one of claims 1 to 3, wherein a sphericity is 80 or more.

5. The polyamide microparticles according to any one of claims 1 to 4, wherein a content of said carbon black is from more than 0 to 5% by mass.

6. A dispersion containing the polyamide microparticles according to any one of claims 1 to 5.

7. A resin composition comprising the polyamide microparticles according to any one of claims 1 to 5.

8. A method for producing polyamide microparticles wherein, in a system that is separated into two phases of a solution phase, in which a polyamide is a main component and carbon black is selectively distributed, and a solution phase, in which a polymer (B) different from said polyamide is a main component, when said carbon black is mixed with a polymer solution prepared by dissolving said polyamide, said polymer (B) and an organic solvent (C), after an emulsion is formed, by bringing a poor solvent of said polyamide into contact with said emulsion, polyamide encapsulated with said carbon black is precipitated.

9. The method for producing polyamide microparticles according to claim 8, wherein said polyamide is polyamide 11 or polyamide 12.

10. The method for producing polyamide microparticles according to claim 8 or 9, wherein an amount of dibutyl phthalate absorption of said carbon black is 200 ml/100 g or less.

11. The method for producing polyamide microparticles according to any one of claims 8 to 10, wherein a temperature difference $\Delta T$ ($\Delta T=Tm-Tc$) between a melting temperature Tm and a cooling crystallization temperature Tc of obtained polyamide microparticles is 25°C or more.

**EP 3 239 214 A1**

## INTERNATIONAL SEARCH REPORT

International application No.

PCT/JP2015/084467

| A. | CLASSIFICATION OF SUBJECT MATTER |
|---|---|

*C08J3/14*(2006.01)i, *C08K3/04*(2006.01)i, *C08L77/00*(2006.01)i

According to International Patent Classification (IPC) or to both national classification and IPC

| B. | FIELDS SEARCHED |
|---|---|

Minimum documentation searched (classification system followed by classification symbols)
C08J3/00-3/28, C08J99/00, C08K3/00-13/08, C08L1/00-101/14

Documentation searched other than minimum documentation to the extent that such documents are included in the fields searched

Jitsuyo Shinan Koho          1922-1996     Jitsuyo Shinan Toroku Koho    1996-2016
Kokai Jitsuyo Shinan Koho    1971-2016     Toroku Jitsuyo Shinan Koho    1994-2016

Electronic data base consulted during the international search (name of data base and, where practicable, search terms used)
DWPI(Thomson Innovation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2009/142231 A1 (Toray Industries, Inc.), 26 November 2009 (26.11.2009), claims 1 to 2, 6 to 7, 10, 12 to 14; paragraphs [0001], [0002], [0028] to [0034], [0042] to [0044], [0089], [0096] to [0100], [0144] to [0151], [0240]; example 8; fig. 6 & EP 2287236 A1 claims 1 to 2, 6 to 7, 10, 12 to 14; paragraphs [0001], [0002], [0029] to [0035], [0043] to [0045], [0090], [0097] to [0101], [0144] to [0152], [0241]; example 8; fig. 6 & US 2011/0070442 A1     & KR 10-2010-0040965 A & CN 101848956 A          & TW 201011062 A | 1-11 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March 2016 (08.03.16) | 15 March 2016 (15.03.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2015/084467

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2001-517168 A  (Speed Part AB),<br>02 October 2001 (02.10.2001),<br>claims; page 9, line 26 to page 10, line 3<br>& WO 1998/051464 A1<br>claims; page 4, lines 11 to 18<br>& US 6531086 B1          & EP 1015214 A | 1-11 |
| Y | JP 10-505116 A  (DTM Corp.),<br>19 May 1998 (19.05.1998),<br>claims 1 to 2; page 21, line 19 to page 24,<br>line 12; page 26, line 6 to page 27, line 12;<br>page 34, line 22 to page 35, line 18; fig. 3, 8<br>& WO 1996/006881 A2<br>claims 1 to 2; page 23, line 6 to page 26, line<br>32; page 29, line 12 to page 30, line 32; page<br>40, line 16 to page 41, line 18; fig. 3, 8<br>& US 5342919 A          & EP 784646 A<br>& KR 10-0372192 B | 1-7,11 |
| Y | JP 2004-107536 A  (Toray Industries, Inc.),<br>08 April 2004 (08.04.2004),<br>paragraph [0018]<br>(Family: none) | 5,8-11 |
| Y | JP 2002-097363 A  (Asahi Kasei Corp.),<br>02 April 2002 (02.04.2002),<br>paragraphs [0049], [0051]<br>(Family: none) | 5,8-11 |
| A | WO 2012/043509 A1  (Toray Industries, Inc.),<br>05 April 2012 (05.04.2012),<br>claims; paragraph [0002]<br>& US 2013/0183528 A1<br>claims; paragraph [0002]<br>& EP 2623542 A1          & CN 103140540 A<br>& TW 201323489 A          & KR 10-2013-0124306 A | 1-11 |
| A | JP 11-216779 A  (Huels AG),<br>10 August 1999 (10.08.1999),<br>claims; paragraphs [0001] to [0003], [0007],<br>[0011] to [0017]<br>& US 6245281 B1<br>claims 1, 2; column 1, lines 6 to 44; column 2,<br>lines 9 to 26; column 2, line 66 to column 4,<br>line 10<br>& EP 911142 A1 | 1-11 |
| A | JP 2007-534818 A  (Degussa GmbH),<br>29 November 2007 (29.11.2007),<br>claims 1, 30; paragraphs [0008], [0070]<br>& US 2012/0041132 A1<br>claims 1, 18; paragraphs [0008], [0064]<br>& WO 2005/105891 A1      & EP 1742986 A<br>& KR 10-2007-0010185 A  & CN 101076550 A | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11216779 A
- WO 2011136263 A
- JP 2010070638 A
- JP 2009013395 A

- JP 2014188871 A
- JP 2008285649 A
- JP 2010235831 A

**Non-patent literature cited in the description**

- **HIDEKI YAMAMOTO.** SP value, base, application and calculation method. Johokiko Co., Ltd, 31 March 2005

- **J. BRAND.** Polymer Handbook Fourth Edition. Wiley, 1998